# EUROPEAN PATENT APPLICATION

(11) **EP 0 657 885 A2**
(43) Date of publication of application: **14.06.1995**
(21) Application number: 94308798.1
(22) Date of filing: 29.11.1994
(51) Int. Cl.: G11B 23/03

(54) **Disc cartridge**

(30) Priority: 30.11.1993 JP 300344/93; 14.03.1994 JP 2064/94 U
(71) Applicant: KABUSHIKI KAISHA TOSHIBA, Kawasaki-shi, Kanagawa-ken 210 (JP)
(72) Inventor: Imaoka, Yoshiharu, c/o Intellectual Property Div., Tokyo (JP); Tomita, Seiji, c/o Intellectual Property Div., Tokyo (JP); Kurafuji, Takamasa, c/o Intellectual Property Div., Tokyo (JP)
(74) Representative: O'Connell, David Christopher

(57) **Abstract**

A disc cartridge apparatus including a cartridge main body wherein a disc having an information bearing surface is rotatably accommodated and which is provided with an opening confronted by an optical pickup for recording or reproducing information signals to or from the disc, a sliding shutter installed in the cartridge main body in capable of sliding between a position where it covers the opening of the cartridge main body an another position where it uncovers the opening, and a plurality of detecting slits defined in right and left symmetry position on the cartridge main body through two sides.

## Description

The present invention generally relates to a disc cartridge apparatus, and more particularly, to a disc cartridge apparatus which accommodates a circular disc such as an optical recording disc, a magneto-optic recording disc and a magnetic disc, having an opening defined for recording or reproducing signals therethrough to or from the disc, and more particularly, to such a disc cartridge apparatus which improves the arrangement of a plurality of the detecting slits for detecting by arranged one side (side A) and the other side (side B) of the double-sides recorded type disc, and a structure of the unintentional elimination preventing member for defining the prohibition of the lettering.

Conventionally a disc cartridge rotatably accommodates a circular disc such as an optical recording disc, a magneto-optic recording disc and a magnetic disc in a cartridge main body comprising an upper case-half and a lower case-half which are butt-joined with each other. In the cartridge main body accommodating the circular disc as mentioned above, an opening confronting an optical pickup for recording or reproducing an information signal is defined in the main body in extending in the radial direction from nearly the center of the disc. The opening also confronts a disc turntable of a disc driving apparatus for rotating the disc with the optical pickup. And on the cartridge main body, a shutter formed by a thin metal plate or an engineering plastics for opening and closing the opening, is installed in capable of sliding.

By the way, a typical conventional disc cartridge accommodates a magnetic disc or an optical disc. This type of disc cartridge is basically used for recording or reproducing to or from only its one side. Thus it records or reproduces by confronted one side to a pickup each other at all times when the disc cartridge is loaded on a disc drive apparatus. Here a fiducial pit (or groove) for defining the position necessary for a loading operation and a slot (or groove) for showing an unintentional elimination prevention (inhibition of write operation) are frequency formed on the single side disc cartridge main body.

On the other hand, in consideration about a disc cartridge which is possible to record or reproduce information signals to or from the double sides of the disc, it had problems that the disc drive apparatus which records or reproduces by changing one aide (side A) with another side (side B) needs detecting slots for the the side A and for the the side B as will as needs detecting slots for telling the the side A from the the side B on the double sides of the cartridge main body, and farther, it needs a large number of slot detecting member such as a detecting switch on each side detecting slots is not defined.

Further, in a conventional cartridge apparatus when it is possible to operate both recording and reproducing, an unintentional elimination prevention slot (or groove) is covered by a covering member and when it is for only reproducing (prohibit a lettering) the covering member is removed or slid so as to uncover the slot (or groove). Thus, a conventional cartridge apparatus had problems that it needed particular component (covering member) and needed an assembly work of the components.

As described above, the conventional disc cartridge apparatus has a drawback that it needs a large part of components for the disc cartridge and disc drive apparatus as well as it is suffered with not only a cost but also a working problem.

In view of the above, it is an object of the present invention to provide a disc cartridge apparatus which is able to simplify its assembly work by reducing its parts count, is advantageous at a cost performance and furthermore, is able to make peripheral circuits compact by minimizing the space between the detecting holes by providing multiple detecting holes symmetrically at the left and the right sides so that they can be utilized for expanding functions.

In order to achieve the above object, a disc cartridge apparatus according to one aspect of the present invention includes:
a cartridge main body wherein a disc having an information bearing surface is rotatably accommodated, and which is provided with an opening confronted by a pickup for recording or reproducing information signals to or from the disc:
a sliding shutter installed in the cartridge main body in capable of sliding between a position where it covers the opening of the cartridge main body an another position where it uncovers the opening; and
a plurality of detecting slits defined in right and left symmetry position on the cartridge main body through two sides.

A disc cartridge apparatus according to another (2nd) aspect of the present invention includes:
a cartridge main body wherein a disc having an information bearing surface is rotatably accommodated, and which is provided with an opening confronted by a pickup for recording or reproducing information signals to or from the disc:
a sliding shutter instilled in the cartridge main body in capable of sliding between a position where it covers the opening of the cartridge main body and another position where it uncovers the opening; and
an unintentional elimination preventing member having a spring member, one end of which is fixed on the cartridge main body and another end is free end, integrally formed on the cartridge main body for defining by locating the free end of the spring member.

A disc cartridge apparatus according to still another (3rd) aspect of the present invention includes:
a main body of a cartridge apparatus in which a disc having a signal bearing surface is accommodated rotatably and the opening confronted with a pickup for recording or reproducing information signals to or from the accommodated disc, and groups of light detecting holes so designed that they are provided as multiple light passing portions at the left and the right symmetrical positions of the main body of the cartridge apparatus penetrating the front and the back of the main body at a space in accord with the mounting space of adjacent light emitting and light receiving elements.

According to still another (4th) aspect of the present invention, in the disc cartridge apparatus as mentioned above the apace between the holes of the light detecting hole groups way be defined to be equal to or above the hole diameter.

According to still another (5th) aspect of the present invention, the disc cartridge apparatus as mentioned above may be so constructed that the tip of the elastically displaceable erroneous erasion preventive member is positioned over the left and the right specific holes adjacent to the light detecting hole groups and is normally closing the holes and is deformed in the direction to leave the light detecting hole groups when opening the holes.

A disc cartridge apparatus according to still another (6th) aspect of the present invention includes a main body of a cartridge apparatus in which a disc having a signal bearing surface is accommodate rotatably and an opening confronted by a pickup for performing the recording or reproduction of information signals to or from the accommodated disc, and holes provided at the left and the right symmetrical positions of the main body penetrating the main body from the front through the back, which have been so formed that a diameter of the right front side hole of the main body of the cartridge apparatus differs from that of the corresponding back side hole, a diameter of the left front side hole differs from that of the corresponding back side hole, a diameter of the right front side hole is equal to that of the back side hole corresponding to the left front side hole and a diameter of the left front side hole is equal to that of the back side hole corresponding to the right front side hole.

According to still another (7th) aspect of the present invention, in the disc cartridge apparatus as mentioned above the one group of the holes are defined in an elliptical shape and the other group of the holes are defined in a circular shape.

According to the first aspect of the present invention, since a plurality of the detecting slit through two sides are defined in right and left symmetry position on the cartridge main body distributed for the the side A and the the side B, if the disc cartridge is changed two sides in the recording or reproducing operation of both the sides A, B, these detecting slits for the the side A or the the side B are always located the same position on the disc drive apparatus, thus the apparatus can use both as the slit detecting member for the the side A and the the side B as wall as economize the optical detector.

Further, if the slit detecting member for the the side A and the the side B are defined since they are located in right and left symmetry positions on the cartridge main body and all of them are defined as through slits, it is possible to synchronously detect both the sides A and B. Also it is possible to changes the two sides A and B. Furthermore, the present invention has an advantages that a detecting slit could be detected from another aide and a degree of freedom on the design will be increase since the slits are shaped in the through slit.

According to the third aspect of the present invention, since a spring member having one end fixed on the cartridge main body and another free end is integrally defined on the cartridge main body so as to define the propriety of lettering by locating the free end, it does not need a particular component (covering member) for unintentional elimination preventing. According to the construction the disc cartridge apparatus with the third aspect is advantageous in working and costical aspect since it does not need an assembly work of the components.

In the disc cartridge apparatus according to still another (4th) aspect of the present invention, it becomes possible to use multiple light detecting holes for multiple purposes and as the space between the holes has been designed to be equal to that of the light emitting and light receiving elements, it is possible to contribute to making the circuit compact without generating an unnecessary space.

In the disc cartridge apparatus according to still another (5th) aspect of the present invention, the erroneous erasion preventive member does not impede the light detection by the detection hole group as it is displaced in the direction opposite to the detection hole group.

In the disc cartridge apparatus according to still other (6th and 7th) aspects of the present invention, as the holes provided at the left and the right sides of the main body of the cartridge apparatus are in different diameters each other, it is possible to absorb the mounting position error of the locating pins engaged into the holes when the cartridge apparatus is mounted in a disc driving gear.

For a better understandings of the present invention and many of the attendant advantages thereof, reference will now be made by way of example to the accompanying drawings, wherein:
FIGURE 1 is a plan view showing the right surface side of the embodiment of the disc cartridge apparatus according to the present invention:
FIGURE 2 is a side view shown in FIGURE 1;
FIGURE 3 is a plan view showing the back surface side of the disc cartridge apparatus shown in FIGURE 1;
FIGURE 4 is a plan view showing the detecting slit of the lower case-half without the upper case-half shown in FIGURE 1; and
FIGURES 5(a) through 5(c) are drawings for explaining the operation of the unintentional elimination preventing member shown in FIGURE 4.

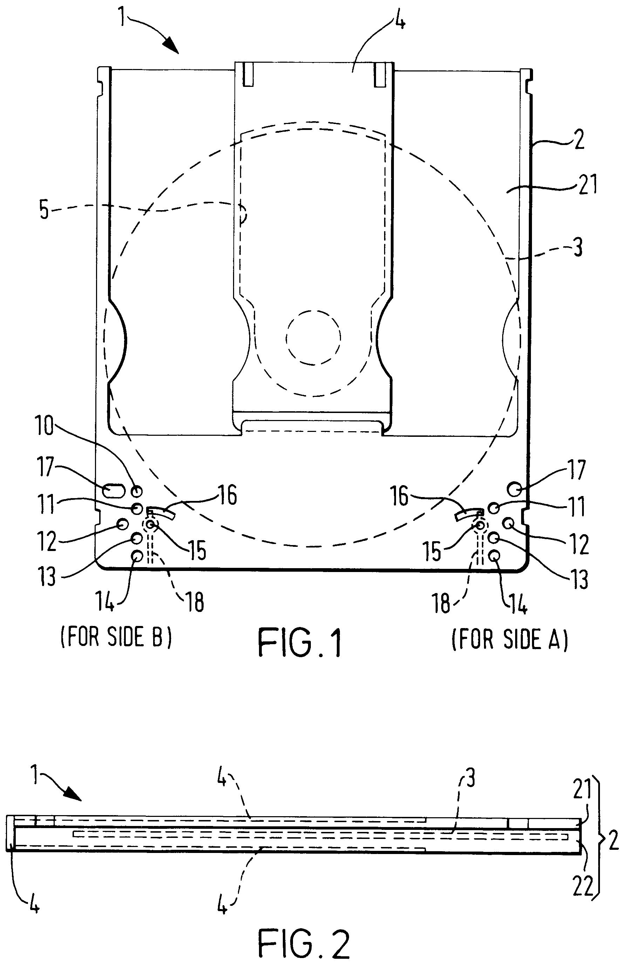

The present invention will be described in detail with reference to the FIGURES 1 through 5.

Throughout the drawings, like or equivalent reference numerals or letters will be used to designate like or equivalent elements for simplicity of explanation.

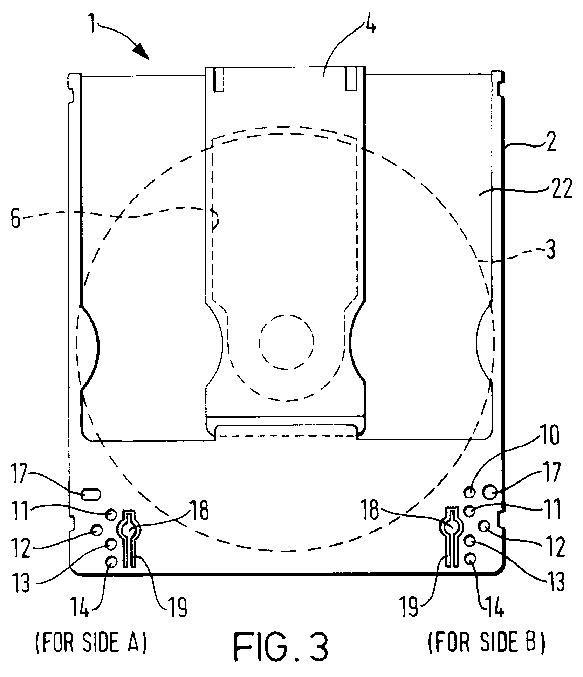

Referring now to FIGURES 1, 2 and 3, a first embodiment of the disc cartridge apparatus according to the present invention will be described in detail. FIGURE 1 is a plan view of right surface side of the disc cartridge main body. FIGURE 2 is a side view shown in FIGURE 1. FIGURE 3 is a plan view of back surface side of FIGURE 1.

In these FIGURES 1 to 3, a disc cartridge 1 is constructed by a cartridge main body 2, a disc 3 such as an optical disc or a magneto-optic disc rotatably accommodated in the cartridge main body 2 and a sliding shutter 4, which compose principle elements of the disc cartridge 1. The cartridge main body 2 has an upper case-half 21 and a lower case-half 22 which are joined by butt-jointing with each other. The upper case-half 21 and the lower case-half 22 are each formed in nearly a flat square plate shape by plastic moldings. The sliding shutter 4 opens and closes openings 5, 6 which are defined in the upper case-half 21 and the lower case-half 22 of the cartridge main body 2, respectively, and confronted by an optical pickup for recording or reproducing an information signal to or from the disc 3. Further, when the sliding shutter 4 which is rotatable by using a shutter drive member (not shown) slides in the right or the left direction, the information bearing surface of the disc 3 is exposed so as to record or reproduce an information signal to or from the disc 3.

Detecting slots 10 through 14 are defined in the rear right and left symmetry positions on the cartridge main body 2 through both the upper case-half 21 and the lower case-half 22. Here the right side detecting slits 11 to 14 are provided for the the side A, while the left side detecting slits 10 through 14 are provided for the the side B. The detecting slit 10 is defined on only the the side B to distinguish the the side A from the the side B. Further a detecting slit 15 for detecting the propriety of unintentional elimination prevention and a narrow belt shape adjusting slit 16 for locating an unintentional elimination preventing spring member 18 having one end fixed on the lower case-half 22 and another free end are integrated in the lower case-half 22 opposite to the engaging slit 15, as shown in FIGURE 3, to normally cover the detecting slit 15. Since the spring member 18 is integrally formed with the lower case-half 22 using a cavity-mold die, a slot 19 is defined on the lower case-half 22 where the spring member 18 is formed. The slot 19 has the width a little wider than the width of the spring member 18 by a given amount allowable the capacity-mold die to be extracted in the direction orthogonal to the lower case-half 22.

The spring member 18 includes a circular 18b for covering enough the detecting slit 15 from a back surface side, a protrusion 18a for adjusting the location extending from the circular 18b, and a bar shape spring allows the circular 18b to move from the position of the detecting slit 15 by resiliently deformable extended from the lower case-half 22.

Further, two fiducial slits 17, 17 for defining a disc locating in the loading operation are defined in right and symmetry position on the rear side of the cartridge main body through both the upper case-half 21 and the lower case-half 22, as shown in FIGURES 1, 3. When the disc cartridge apparatus 1 is loaded into the disc drive apparatus (not shown) the disc cartridge 1 is defined its horizontal position by positioning pins of the disc cartridge 1 being engaged with the fiducial slit 17.

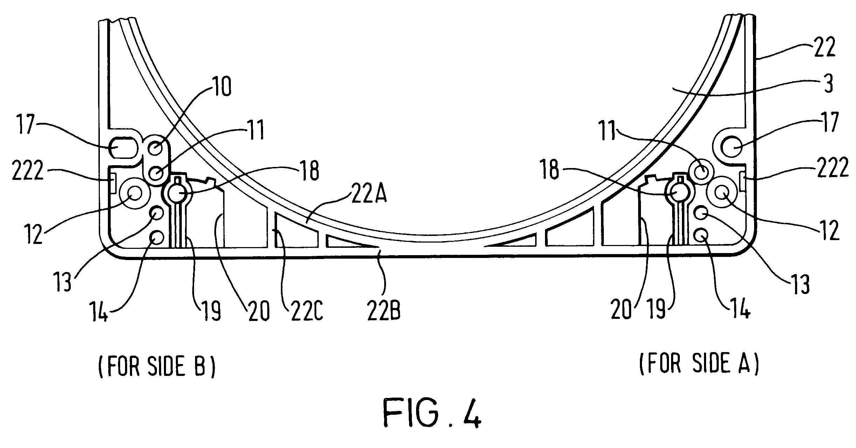

Next, an unintentional elimination member will be explained in reference to FIGURES 1 and 4. FIGURE 4 shows a plan view of the lower case-half 22 seen from the rear side, but without the upper case-half 21.

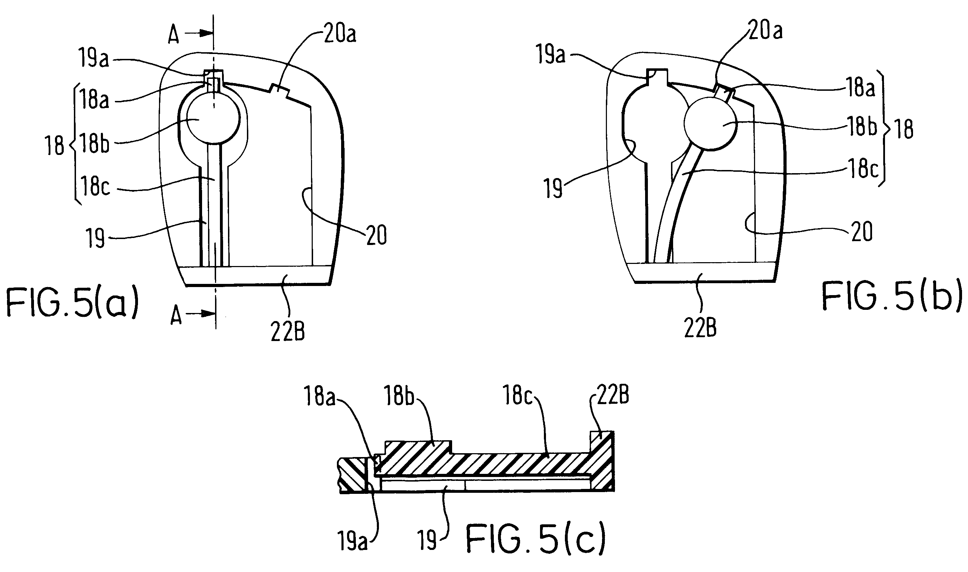

An adjusting slit 16 is defined on the upper case-half 21, as shown in FIGURE 1, for locating a detecting slit 15 for unintentional elimination prevention detecting and the spring member 18 on the lower case-half 22 for effecting the opening and closing of the detecting slit 15. Further a circular rib 22A for accommodating the disc 3 by defined in horizontal direction, a rib 22B forms the side wall of the lower case-half 22, and a support rib 22C extending between the circular rib 22A and the rib 22B are integrally formed with the lower case-half 22. These ribs 22A to 22C are butt-joined with the fitting surface of the upper case-half 21 by an engaging member (not shown) defined on both the upper and lower case-halves 21, 22. A numeral 222 indicates an engaging slit defined on the lower case-half 22 to fit into an engaging hook on the upper case-half side 21. Further, the detecting slits 10 through 14 (the detecting slit 10 is on the the side B), the fiducial slit 17 for locating, and the spring member 18 for unintentional elimination prevention are provided in an area defined by the circular rib 22A and the side-wall 22B on rear side of the lower case-half 22. A slit 19 larger than the external form of the spring member 18 is formed around the spring member 18. A groove 20 thinner than its peripheral is formed in square shape, as one side of the slit 19 is a part of it's one surface. The groove 20 moves the circular 18b of the spring member 18 for unintentional elimination prevention (see FIGURE 5(a)) and the protrusion 18a for adjusting the location of the circular 18b (see FIGURE 5(a)) to a write protection position.

FIGURES 5(a) through 5(c) show an operation of the spring member 18 and the groove 20 for on unintentional elimination prevention shown in FIGURE 4.

FIGURE 5(a) shows the position where the unintentional elimination preventing spring member 18 in normal state records or reproduces an information signal to or from the disc 3 accommodated in the disc cartridge 1.

FIGURE 5(b) shows the state that an adjusting bar shape member bumps against the circular 18b of the spring member 18 through the slot 19 form the back of the lower case-half 22 so as to depress the spring member 18 against the upper case-half 21. According to this, the location adjusting protrusion 18a is unengaged from an engaging portion 19a of the slit 19 for rotating the circular 18b of the spring member 18 so as to engage the location adjusting protrusion 18a with an engaging portion 20a of the groove 20. Accordingly, since a penetrate slit through a detecting slit 15 on the upper case-half 21 and the slit 19 in open state on the lower case-half 22, the disc cartridge 1 is set up in write protection state.

To back the disc cartridge 1 in the lettering possible state shown in FIGURE 5(a) from the write protection state shown in FIGURE 5(b), a small diameter adjusting bar shape member is inserted through an adjust slit 16 defined on the upper case-half 21 for disengaging a location adjusting protrusion 18a on a spring member 18 from an engaging portion 20a of a groove 20 so as to back a circular 18b to central portion of a slit 19 by a righting moment of a bar shape spring member 18c and thus allow the disc cartridge 1 to back in the write ready state shown in FIGURE 5(a).

FIGURE 5(c) shows a cross section along the line A-A in FIGURE 5(a). A circular 18b of a springs member 18, as shown in FIGURE 5(c), is possible to move on the base of a groove 20 which is a thin plate extended from a slit 9 by its bend deformation when its location adjusting protrusion 18a is unengaged from an engaging portion 19a of the slit 19.

In the above mentioned embodiments, since a plurality of the detecting slit through two sides are defined in right and left symmetry position on the cartridge main body distributed for the side A and the side B of the disc cartridge is changed two sides in the recording or reproducing operation of both sides A and B, these detecting slit for the side A or the side B are always located the same position on the disc drive apparatus, thus the apparatus can use both as slit detecting member for the side A and the one for the side B as well as economize the optical detector. Further, if the slit detecting member for each the side A and the side B is defined since it is located in right and lift symmetry position on the cartridge main body and all of it is a through slit, it is possible the synchronous detect of both A and the side B, and it is also possible to detect the both sides simultaneously when the apparatus changes the two sides. Further more, the invention has advantages that a detecting slit could be detected from another side and a degree of freedom on the design will be increase since the slit is a through slit.

Further in the above embodiments, since a spring member one end of which is fixed on the cartridge main body, and another end is free end is integrally defined on the cartridge main body so as to defined the propriety of unintentional elimination prevention by locating the tip of the spring member, it does not need a particular component (covering member) for unintentional elimination preventing. According to this, the invention is advantageous in working and costical aspect since it does not need an assembly work of the components.

In particular, in the present invention it has been so designed that the light detecting hole groups have been provided as multiple light passing portions penetrating the main body 2 of the cartridge apparatus from the front through the back at the left and the right symmetrical positions and the space between multiple light passing portions at both sides are in accord with the mounting space of multiple light emitting and light receiving elements. Because of this, it becomes possible to use multiple light detecting holes for multiple purposes and it is possible to contribute to making the circuit compact without generating an unnecessary space as the space has been designed to be equal to the space of the mounted light emitting and the light receiving elements. That is, the light emitting element and the light receiving element are opposed to each other on the front and the back side detection holes and multiple elements are mounted at adjacent positions on the front and the back sides. At this time, it is necessary to arrange them efficiently without occupying an unnecessary space and this demand will be satisfied by the design for mounting the light detection hole groups as described above. Here, if a space of at least 5mm is required for multiple light emitting elements and the light receiving elements mounted adjacently, the hole space of the light detecting hole groups is not less than 5mm but more than that. Further, depending upon the space between multiple light emitting and light receiving elements to be mounted, the space between holes of the light detecting hole groups is equal to at least the hole diameter or above it.

Further, reference holes 17 for positioning have been so formed that a diameter of the hole at the right front side of the main body of the cartridge apparatus differs from that of the corresponding hole at the back side, a diameter of the right front side hole is equal to that of the back side hole corresponding to the left front side hole, and a diameter of the left front side hole is equal to that of the back side hole corresponding to the right front side hole. Further, one of these holes is formed in an elliptical shape and the other is in a circular shape. When the disc cartridge apparatus is mounted to a disc driving gear, the reference holes 17 engage with locating pins provided on this disc driving gear, respectively. At this time, the position error of the locating pins or the forming error of the reference holes 17 themselves is absorbed by the elliptical shape reference holes 17. That is, the cartridge apparatus is located by engaging the circular shape reference holes 17 with the locating pins and the elliptical reference holes 17 engage with the locating pins leaving a gap, thus they are easily and positively located. As these reference holes 17 in the same shape are arranged at the same positions on the front and the back sides, the same effect is obtained even when the cartridge apparatus is turned over.

Further, an erroneous erasion preventive elastic member 18 which is elastically displaceable has been provided for specific left and right holes at the inside, adjoining to the light detecting hole groups and its tip normally closes the holes and is deformed in the direction leaving the light detecting hole groups when opening the holes. Thus, the elastic member 18 is displaced in the direction opposite to the light detecting hole groups and therefore, it does not impede the light detection by the light detecting hole groups.

Here, in the above embodiments, an unintentional elimination preventing member constructed by the spring member 18, the slit 19, the groove 20, the detecting slit 15, and the adjusting slit 16 is defined in both the right and left sides on the cartridge main body 2 for double side recorded type. However it is sure that it can be defined on the either side of the cartridge main body 2.

Further more, the structure of an unintentional elimination preventing member is not limited such embodiments mentioned above and various deformation enforcement will be possible. For example, the spring member 18 for both the sides A and B can be integrally formed in the upper case-half 21. Or the spring member 18 for the the side A can be integrally formed in the upper case-half 21, while the one for the the side B can be in the lower case-half 22.

As described above, according to the present invention it is possible to provide a disc cartridge apparatus which simplifies the assembly work as parts count is low, is advantageous in a coat performance, compatible with a double-side disc, by providing multiple light detecting holes at the left and right sides symmetrically, is able to use them for expanding functions and is able to make peripheral circuits compact by arranging the holes at a minimum required space. Furthermore, it is also possible to surely absorb a mechanical dimensional error of a disc driving gear.

As described above, the present invention can provide an extremely preferable disc cartridge apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A disc cartridge apparatus comprising:
a main body of a cartridge apparatus which accommodates a disc having a signal bearing surface rotatably and is provided with an opening confronted by a pickup for performing the recording or the reproduction of information signals to or from the accommodated disc;
a sliding shutter mounted to the main body of the cartridge apparatus in capable of sliding between positions where the opening is to be closed and opened; and
multiple detection ports provided at the left and right symmetrical positions penetrating the main body of the cartridge apparatus from the front through the back.

2. A disc cartridge apparatus comprising:
a main body of a cartridge apparatus which accommodates a disc having a signal bearing surface rotatably and is provided with an opening confronted by a pickup for performing the recording or reproduction of information signals to or from the accommodated disc;
a sliding shutter mounted to the main body of the cartridge apparatus in capable of sliding between positions where the opening is to be closed and opened; and
an erroneous erasion preventive means integrally molded with the main body of the cartridge apparatus, which is provided with an elastic member with its one end fixed to the main body of the cartridge apparatus and the other end serving as a free-end, for defining writability of information to a disc by defining the position of the free-end of the elastic member.

3. A disc cartridge apparatus comprising:
a main body of a cartridge apparatus which accommodates a disc having a signal bearing surface rotatably and is provided with an opening confronted by a pickup for performing the recording or reproduction of information signals to or from the accommodated disc; and
Groups of light detecting holes provided as multiple optical passing portions at the left and right symmetrical positions penetrating the main body of the cartridge apparatus from the front through the back, so designed that the space of the optical passing portions at respective sides is in accord with the space of multiple adjacent light emitting and light receiving elements.

4. A disc cartridge apparatus as claimed in claim 3, wherein the space between the light detecting hole groups is equal to or larger than the diameter of corresponding hole.

5. A disc cartridge apparatus as claimed in claim 3, wherein adjoining the light detecting hole groups, the tip of the elastically displaceable erroneous erasion preventive member is positioned in each prescribed hole at the left and right side in such a structure that the erroneous erasion preventive member normally closes the hole and is deformed in the direction to leave the light detecting hole groups when exposing the hole.

6. A disc cartridge apparatus comprising:
a main body of a cartridge apparatus which accommodates a disc having a signal bearing surface rotatably and is provided with an opening confronted by a pickup for performing the recording or reproduction of information signals to or from the accommodated disc; and
holes provided at the left and right symmetrical positions of the main body of the cartridge apparatus, and a diameter of the right front side holes of the main body of the cartridge apparatus has been formed differing from that of the corresponding back side holes, a diameter of the left front side holes differs from that of the corresponding back side holes, a diameter of the right front side hole is equal to that of the back side hole corresponding to the left front side hole, and a diameter of the left front side hole is equal to that of the back side hole corresponding to the right front side hole.

7. A disc cartridge apparatus as claimed in Claim 6, wherein one group of the holes has in an elliptical shape and the other group has in a circular shape.
